# FASCICULE DE BREVET EUROPEEN

(11) **EP 2 485 943 B1**
(45) Date de publication et mention de la délivrance du brevet: **16.12.2015**
(21) Numéro de dépôt: 10765384.2
(22) Date de dépôt: 05.10.2010
(51) Int. Cl.: B64D 31/04, G05G 1/04, B63H 21/22

(54) **DISPOSITIF DE COMMANDE DES GAZ D'UN AERONEF, INCORPORANT UNE LIAISON PAR CAMES**
FLUGZEUGDROSSELSTEUERUNG MIT NOCKENKOPPLUNG
AIRCRAFT THROTTLE CONTROL DEVICE INCLUDING A CAM COUPLING

(30) Priorité: 06.10.2009 FR 0904760
(43) Date de publication de la demande: 15.08.2012
(73) Titulaire: SAGEM DEFENSE SECURITE, 92100 Boulogne Billancourt (FR)
(72) Inventeur: ELABELLAOUI, Hafid, F-75015 Paris (FR); BESOLD, Jean-Eric, F-75015 Paris (FR); PAUTARD, Sébastien, F-75015 Paris (FR); CARTRY, Thierry, F-75015 Paris (FR); ENGLER, David, F-75015 Paris (FR); MERLET, Etienne, F-75015 Paris (FR)
(74) Mandataire: Beaudouin-Lafon, Emmanuel
(86) Numéro de dépôt international: PCT/EP2010/006057
(87) Numéro de publication internationale: WO 2011/042147

(56) Documents cités:
- EP-A1- 1 588 942
- DE-C- 383 044
- RU-C1- 2 031 814
- US-A- 3 572 155
- US-A- 6 047 609

## Description

La présente invention concerne un dispositif de commande des gaz d'un moteur d'aéronef. Un tel dispositif est connu de US 3 572 155, qui est considéré comme l'art antérieur le plus proche et décrit les caractéristiques du préambule de la revendication 1.

Les turboréacteurs modernes sont équipés d'un dispositif inverseur de poussée permettant de diriger une partie du flux sortant du turboréacteur vers l'avant du turboréacteur (selon une direction formant généralement un angle de quarante-cinq degrés environ avec la direction d'avancement de l'aéronef) afin de compléter l'action des freins sur le ralentissement de l'aéronef à l'atterrissage. Différents dispositifs inverseurs existent et notamment les dispositifs à portes et les dispositifs à grilles.

Il existe également des moteurs à hélice incorporant un dispositif inverseur de poussée agencée pour inverser le pas de l'hélice.

Le poste de pilotage des aéronefs pourvus d'un tel moteur est équipé d'un dispositif de commande des gaz permettant au pilote de commander le débit de carburant admis dans la chambre de combustion du moteur et le dispositif inverseur de poussée. Le dispositif de commande comprend à cette fin un bâti sur lequel sont montées pour pivoter une roue codeuse ainsi qu'une manette principale, ou manette des gaz, et une manette secondaire, ou manette d'inversion de poussée, qui sont agencées pour entraîner en rotation la roue codeuse. La roue codeuse est associée à des capteurs reliés à une unité de commande du moteur. Les manettes sont chacune mobiles entre une position de repos et une position d'actionnement maximal. La manette d'inversion de poussée est articulée sur la manette des gaz. L'ensemble des deux manettes est relié à la roue codeuse via un système complexe de liaison comprenant une roue intermédiaire sur laquelle la manette des gaz est montée coaxialement et qui est reliée à la roue codeuse. L'entraînement de la roue intermédiaire par les manettes est contrôlé par un dispositif interdisant le déplacement d'une manette si l'autre manette est hors de sa position de repos. Ce dispositif repose sur des cames, des pièces en arc-boutement ou ayant des courses présentant des points de rebroussement.

Dans les systèmes les plus élaborés, la course de chaque manette comprend une zone de transition au voisinage immédiat de la position de repos. Lorsqu'une manette se trouve dans la zone de transition et que l'autre manette est déplacée hors de sa position de repos, la première manette est ramenée dans sa position de repos.

Le système de liaison présente un encombrement et un poids importants, du fait notamment de la roue intermédiaire. En outre, les efforts transmis sont élevés et obligent à un dimensionnement conséquent des pièces du système de liaison contribuant au poids et au volume du système de liaison, d'autant plus que tout élément entrant dans la chaîne de liaison entre l'une quelconque des manettes et la roue codeuse doit être dupliqué pour obtenir une redondance indispensable à la sécurité du dispositif.

Un but de l'invention est de fournir un moyen permettant d'obtenir une amélioration sur au moins une partie des inconvénients ci-dessus.

A cet effet, on prévoit, selon l'invention, un dispositif de commande d'un moteur d'aéronef, comportant un bâti sur lequel sont montées pour pivoter une roue codeuse ainsi qu'une manette principale et une manette secondaire d'entraînement en rotation de la roue codeuse, les manettes étant chacune mobiles entre une position de repos et une position d'actionnement maximal, la manette secondaire étant montée pour pivoter sur la manette principale. Un premier chemin de came est ménagé sur une partie solidaire de la roue codeuse et un deuxième chemin de came est ménagé sur le bâti, les deux chemins de came ayant une portion en regard dans laquelle est reçu un doigt qui est monté sur la manette principale pour coulisser parallèlement à la roue codeuse et qu'une bielle relie de façon permanente à la manette secondaire. Les chemins de came sont agencés de telle manière que la manette principale puisse entraîner la roue codeuse lorsque la manette principale est manoeuvrée depuis la position de repos de la manette secondaire et la manette secondaire puisse entraîner la roue codeuse lorsque la manette secondaire est manoeuvrée depuis la position de repos de la manette principale, en interdisant un mouvement d'une manette lorsque l'autre est hors de sa position de repos.

Ainsi, une action sur la manette principale provoque un déplacement en arc de cercle du doigt entraînant directement la roue codeuse et une action sur la manette secondaire provoque un déplacement rectiligne du doigt transformé par le premier chemin de came en rotation de la roue codeuse. Le doigt coopère avec les chemins de came qui sont agencés de telle manière que la manette principale puisse entraîner la roue codeuse lorsque la manette principale est manoeuvrée depuis la position de repos de la manette secondaire et la manette secondaire puisse entraîner la roue codeuse lorsque la manette secondaire est manoeuvrée depuis la position de repos de la manette principale, en interdisant un mouvement d'une manette lorsque l'autre est hors de sa position de repos.

Selon une première caractéristique, la manette principale est coaxiale à la roue codeuse et le deuxième chemin de came comprend un premier tronçon, en arc de cercle coaxial à la roue codeuse, de rayon déterminé pour autoriser le pivotement de la manette principale en maintenant la manette secondaire en position de repos et un deuxième tronçon, rectiligne, s'étendant selon une direction adaptée pour autoriser le déplacement de la manette secondaire en maintenant la manette principale en position de repos.

De préférence, le deuxième chemin de came comporte entre le premier tronçon et le deuxième tronçon une rampe qui définit une zone de transition au voisinage de la position de repos en agissant sur le doigt de telle manière que, lorsqu'une des manettes se trouve dans la zone de transition, un déplacement de l'autre des manettes vers sa position d'actionnement maximal provoque le retour de la première manette dans sa position de repos.

Il est ainsi possible de déplacer une des manettes lorsque l'autre manette est proche de sa position de repos, cette dernière manette étant automatiquement ramenée dans sa position de repos.

Selon une deuxième caractéristique, le premier chemin de came comprend un premier tronçon agencé pour provoquer un pivotement de la roue codeuse lorsque le doigt est entraîné par la manette secondaire déplacée entre ses deux positions, le premier tronçon ayant une des formes du groupe suivant :
- rectiligne et formant un angle avec une direction radiale de la roue codeuse,
- incurvée à concavité tourné vers l'axe de pivotement de la roue codeuse.

Avantageusement, le premier chemin de came comprend un deuxième tronçon s'étendant radialement depuis un pourtour de la roue codeuse jusqu'au premier tronçon.

Ceci permet de limiter une transmission d'effort de la roue codeuse à la manette secondaire lorsque la roue codeuse est déplacée par la manette principale.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique éclatée d'un dispositif de commande conforme à un premier mode de réalisation de l'invention,
- les figures 2 et 3 sont des vues schématiques de ce dispositif, la manette principale ayant été déplacée hors de sa position de repos (le bâti étant montré en surimpression à la figure 3),
- la figure 4 est une vue analogue à la figure 2, la manette principale étant en position de repos et la manette secondaire étant vers sa position d'actionnement maximal,
- la figure 5 est une vue analogue à la figure 2, la manette principale ayant été déplacée hors de sa position de repos et la manette secondaire étant dans une zone de transition (le bâti étant montré en surimpression de la roue codeuse),
- la figure 6 est une vue schématique d'un dispositif de commande conforme à un deuxième mode de réalisation de l'invention, la manette principale ayant été déplacée hors de sa position de repos,
- la figure 7 est une vue analogue à la figure 6 de ce mode de réalisation, la manette secondaire ayant été déplacée hors de sa position de repos,
- la figure 8 est une vue partielle agrandie de ce dispositif dans la zone de transition de la manette principale,
- la figure 9 est une vue analogue à la figure 6 d'un dispositif de commande selon une première variante du deuxième mode de réalisation, avec les deux manettes en position de repos (a), la manette secondaire seule en position de repos (b), la manette principale seule en position de repos (c),
- la figure 10 est une vue analogue à la figure 6 d'un dispositif de commande selon une deuxième variante du deuxième mode de réalisation, avec les deux manettes en position de repos (a), la manette secondaire seule en position de repos (b), la manette principale seule en position de repos (c),

Le dispositif de commande des gaz ici décrit est agencé pour commander le débit de carburant et un dispositif inverseur de poussée d'un moteur d'aéronef.

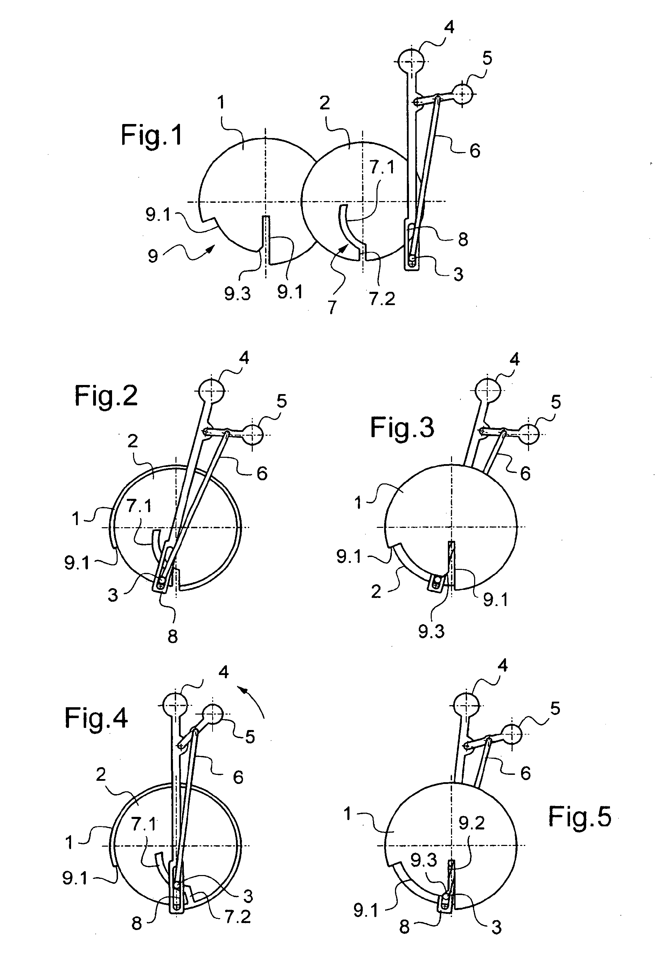

En référence aux figures 1 à 5, le dispositif de commande comprend un bâti 1 sur lequel est montée pour pivoter une roue codeuse 2. Des capteurs de position angulaire de la roue codeuse 2, non visibles sur les figures, sont montés sur le bâti 1 en regard du pourtour de la roue codeuse 2.

Sur le bâti 1 est montée une manette principale 4 pour pivoter coaxialement à la roue codeuse 2. La manette principale 4 comprend une structure radialement déportée sur laquelle est montée une manette secondaire 5 pour pivoter autour d'un axe parallèle à l'axe de rotation de la roue codeuse 2 et de la manette principale 4. Les manettes 4, 5 pivotent entre une position de repos (représentée sur la figure 1 pour les deux manettes) et une position d'actionnement maximal. La manette principale 4 est une manette de commande des gaz permettant de commander le débit de carburant et sa position d'actionnement maximal se trouve sur la droite sur la figure 1 : le pilote pousse la manette principale 4 pour augmenter la puissance délivrée par le moteur. La manette secondaire 5 est une manette de commande du dispositif inverseur de poussée et sa position d'actionnement maximal se trouve à gauche sur la figure 1 : le pilote tire sur la manette secondaire 5 pour obtenir l'inversion de poussée maximale.

La manette secondaire 5 pivote sur la structure radialement déportée de la manette principale 4 et est reliée de manière directe et permanente par une bielle 6 à un doigt 3 monté sur la manette principale 4, dans une rainure oblongue 8 de cette dernière, pour coulisser le long d'une direction radiale de la roue codeuse 2. Le doigt 3 s'étend ici d'un côté de l'axe de pivotement de la roue codeuse 2 opposé à la manette secondaire 5.

Un premier chemin de came 7 est ménagé dans la roue codeuse 2 pour recevoir le doigt 3 à coulissement. Le chemin de came 7 comprend un tronçon incurvé 7.1, à concavité orientée vers l'axe de pivotement de la roue codeuse 2, agencé pour transformer le coulissement du doigt en un mouvement de rotation de la roue codeuse 2 et un tronçon rectiligne 7.2 s'étendant selon une direction radiale de la roue codeuse 2 depuis l'extrémité la plus excentrée du tronçon incurvé 7.1 pour aboutir au voisinage du pourtour de la roue codeuse 2.

Un deuxième chemin de came 9 est ménagé dans le bâti 1 pour recevoir le doigt 3 à coulissement. Le chemin de came 9 comprend un tronçon en arc de cercle 9.1, s'étendant au voisinage du pourtour de la roue codeuse 2 en ayant un rayon inférieur au rayon de la roue codeuse 2, et un tronçon rectiligne 9.2 qui s'étend selon une direction radiale de la roue codeuse 2 et qui se raccorde au tronçon en arc de cercle 9.1 par une rampe 9.3.

Quelle que soit la position de la roue codeuse 2 par rapport au bâti 1, les chemins de came 7 et 9 ont une portion en regard qui reçoit le doigt 3.

Lorsque la roue codeuse 2 est dans sa position commune aux positions de repos des manettes 4, 5 (voir la figure 1), le doigt 3 se trouve dans les tronçons rectilignes 7.2 et 9.2 en regard de la rampe 9.3.

Depuis cette position de la roue codeuse 2 commune aux positions de repos des manettes, la manette principale 4 peut être déplacée vers sa position d'actionnement maximal (figures 2 et 3). Ce faisant, le doigt 3 est engagé dans le tronçon en arc de cercle 9.1 tout en restant engagé dans le tronçon rectiligne 7.2 de sorte que le doigt 3 a un mouvement en arc de cercle et entraîne en rotation la roue codeuse 2. Le tronçon en arc de cercle 9.1 interdit tout déplacement du doigt 3 vers l'axe de pivotement de la roue codeuse 2 et interdit donc tout déplacement de la manette secondaire 5 hors de sa position de repos.

Depuis la position de la roue codeuse 2 commune aux positions de repos des manettes, la manette secondaire 5 peut être déplacée vers sa position d'actionnement maximal (figure 4). Ce faisant, le doigt 3 est engagé dans le tronçon incurvé 7.1 tout en restant engagé dans le tronçon rectiligne 9.2 de sorte que le doigt 3 a un mouvement rectiligne qui est transformé en un mouvement circulaire de la roue codeuse 2 par le tronçon incurvé 7.1. Le tronçon rectiligne 9.2 interdit tout débattement angulaire du doigt 3 et interdit donc tout déplacement de la manette principale 4 hors de sa position de repos.

La rampe 9.3 permet de définir une zone de transition : lorsque le doigt 3 se trouve au niveau de la rampe 9.3, la manette principale 4 et/ou la manette secondaire 5 se trouve au voisinage de leur position de repos. Lorsque la manette 4, 5 respectivement est déplacée vers sa position d'actionnement maximal, la rampe 9.3 va ramener la manette 5, 4 respectivement en position de repos tandis que le mouvement de la manette 4, 5 se poursuit (figure 5).

L'inclinaison et la dimension de la rampe 9.3 vont permettre de déterminer l'étendue des zones de transition de chacune des manettes. Ainsi, par exemple :
- si la manette principale 4 est décalée de moins de deux degrés par rapport à sa position de repos, tout déplacement de la manette secondaire 5 hors de sa position de repos entraîne le retour de la manette principale 4 dans sa position de repos,
- si la manette secondaire 5 est décalée de moins de quinze degrés par rapport à sa position de repos, tout déplacement de la manette principale 4 hors de sa position de repos entraîne le retour de la manette secondaire 5 dans sa position de repos.

L'incurvation du tronçon incurvé 7.1 permet d'adapter le pivotement de la roue codeuse 2 à la course du doigt 3.

Les éléments identiques ou analogues à ceux précédemment décrits porteront les mêmes références numériques dans la description qui suit du deuxième mode de réalisation.

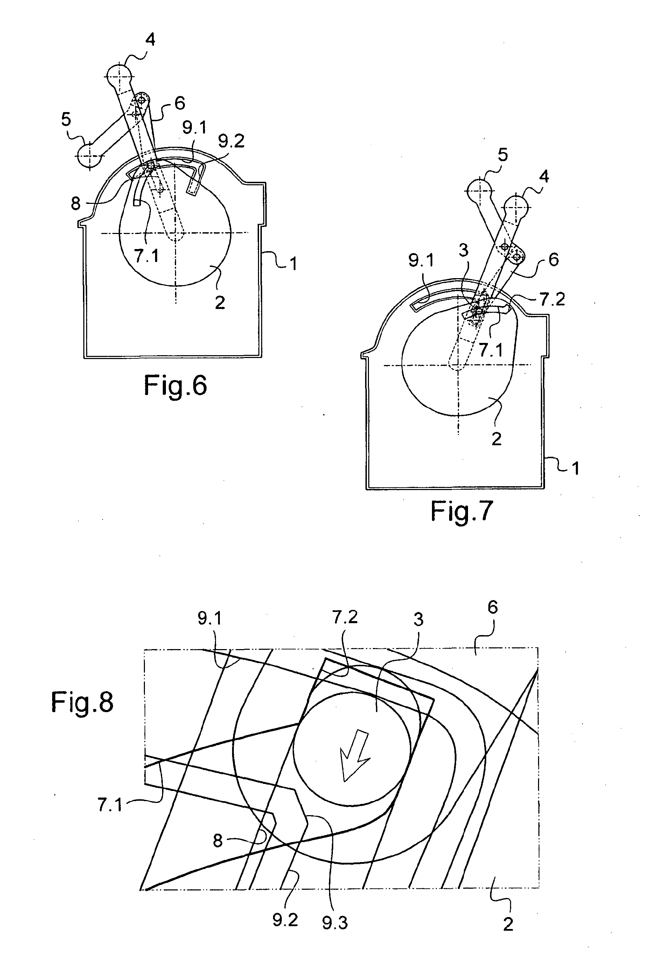

En référence aux figures 6 à 8, le dispositif de commande conforme au deuxième mode de réalisation comprend, comme précédemment, un bâti 1, une roue codeuse 2, des manettes 4, 5, une bielle 6 reliant la manette secondaire 5 à un doigt 3 reçu dans une rainure 8 de la manette principale 4, des chemins de came 7 et 9 ménagés respectivement dans la roue codeuse 2 et le bâti 1.

Dans ce mode de réalisation, la rainure 8 est ménagée entre l'axe de pivotement de la manette principale 4 et la manette secondaire 5, dégageant le bas de la roue codeuse 2 pour placer les capteurs non représentés sur la figure.

Le tronçon incurvé 7.1 se situe au voisinage du pourtour de la roue codeuse 2. L'incurvation de ce tronçon définit la rotation effectuée par la roue codeuse 2 en fonction du déplacement radial du doigt 3. Le tronçon rectiligne 7.2 reçoit le doigt 3 lorsque la manette principale 4 est utilisée pour déplacer la roue codeuse 2. Le doigt 3 est alors en contact avec l'une ou l'autre des faces sensiblement radiales du tronçon rectiligne 7.1 facilitant la transmission de l'effort du doigt 3 à la roue codeuse 2 lorsque la manette principale 4 est actionnée (figure 6, la position d'actionnement maximal de la manette principale 4 est à gauche).

Le chemin de came 9 a la même forme que précédemment.

Le déplacement de la roue codeuse 2 par la manette principale 4 est visible sur la figure 6. Le déplacement de la roue codeuse 2 par la manette secondaire 5 est visible sur la figure 7 (le début du mouvement est représenté figure 8).

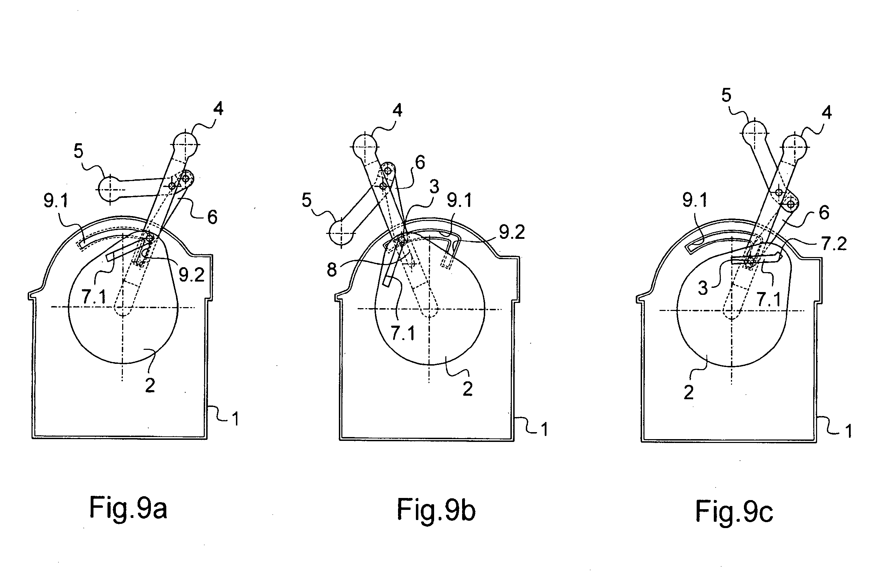

Dans la variante de la figure 9, le chemin de came 7 comprend un premier tronçon rectiligne 7.1 formant un angle avec un deuxième tronçon rectiligne 7.2 qui s'étend selon une direction radiale de la roue codeuse 2. Le tronçon 7.1, rendu rectiligne par rapport à la variante précédente pour en faciliter sa réalisation, est orienté de manière à transformer le coulissement radial du doigt 3 en pivotement de la roue codeuse 2 (figure 9.c).

Les positions de repos des manettes et l'actionnement de la manette principale 4 sont visibles sur les figures 9.a et 9.b.

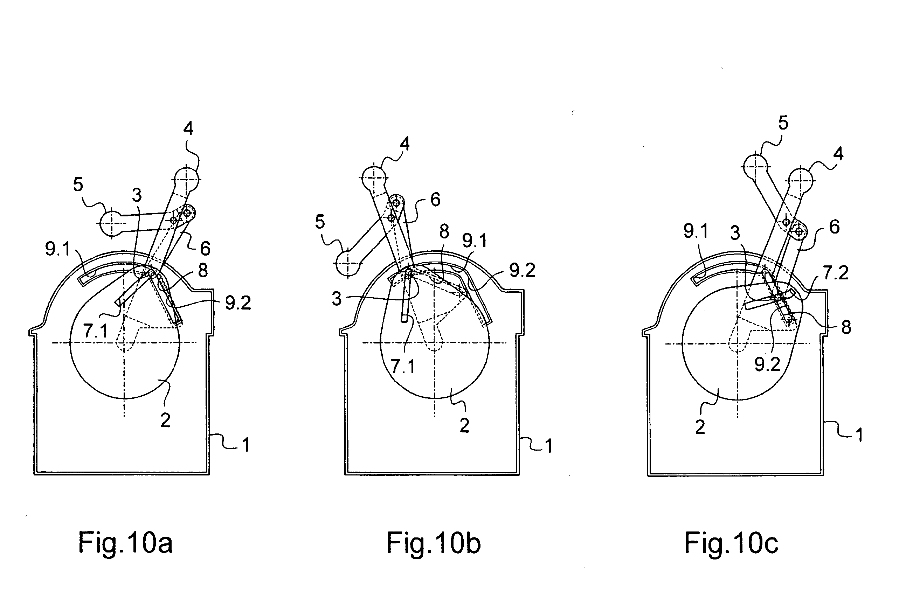

Dans la variante de la figure 10, la rainure 8 forme un angle avec la direction radiale de la roue codeuse 2 et le tronçon rectiligne 9.2 forme un angle identique avec la direction radiale de la roue codeuse 2 lorsque la manette principale 4 est dans sa position de repos.

L'angle permet de régler la cinématique du pivotement de la roue codeuse 2 en fonction de la course de la manette secondaire 5.

Bien entendu, l'invention n'est pas limitée aux modes de réalisations décrits mais englobe toute variante entrant dans le champ de l'invention telle que définie par les revendications.

En particulier, l'invention peut être obtenue en mélangeant des caractéristiques des modes de réalisation et variantes ci-dessus.

La manette principale peut comprendre deux flasques entre lesquels sont montées la manette secondaire et la bielle.

## Revendications

1. Dispositif de commande d'un moteur d'aéronef, comportant un bâti (1) sur lequel sont montées pour pivoter une roue codeuse (2) ainsi qu'une manette principale (4) et une manette secondaire (5) d'entraînement en rotation de la roue codeuse, les manettes étant chacune mobiles entre une position de repos et une position d'actionnement maximal, la manette secondaire étant montée pour pivoter sur la manette principale, **caractérisé en ce qu'**un premier chemin de came (7) est ménagé sur une partie solidaire de la roue codeuse et un deuxième chemin de came (9) est ménagé sur une partie solidaire du bâti, les deux chemins de came ayant une portion en regard dans laquelle est reçu un doigt (3) qui est monté sur la manette principale pour coulisser parallèlement à la roue codeuse et qu'une bielle (6) relie de façon permanente à la manette secondaire, et **en ce que** les chemins de came sont agencés de telle manière que la manette principale puisse entraîner la roue codeuse lorsque la manette principale est manoeuvrée depuis la position de repos de la manette secondaire et la manette secondaire puisse entraîner la roue codeuse lorsque la manette secondaire est manoeuvrée depuis la position de repos de la manette principale, en interdisant un mouvement d'une manette lorsque l'autre est hors de sa position de repos.

2. Dispositif selon la revendication 1, dans lequel la manette principale (4) est coaxiale à la roue codeuse (2) et le deuxième chemin de came (9) comprend un premier tronçon (9.1), en arc de cercle coaxial à la roue codeuse, de rayon déterminé pour autoriser le pivotement de la manette principale en maintenant la manette secondaire (5) en position de repos et un deuxième tronçon (9.2), rectiligne, s'étendant selon une direction adaptée pour autoriser le déplacement de la manette secondaire (5) en maintenant la manette principale (4) en position de repos.

3. Dispositif selon la revendication 2, dans lequel le deuxième chemin de came (9.2) comporte entre le premier tronçon et le deuxième tronçon un rampe (9.3) qui définit une zone de transition au voisinage de la position de repos en agissant sur le doigt (3) de telle manière que, lorsqu'une des manettes (4, 5) se trouve dans la zone de transition, un déplacement de l'autre des manettes vers sa position d'actionnement maximal provoque le retour de la première manette dans sa position de repos.

4. Dispositif selon la revendication 2, dans lequel le premier chemin de came (7) comprend un premier tronçon (7.1) agencé pour provoquer un pivotement de la roue codeuse (2) lorsque le doigt (3) est entraîné par la manette secondaire (5) déplacée entre ses deux positions, le premier tronçon ayant une des formes du groupe suivant :
- rectiligne et formant un angle avec une direction radiale de la roue codeuse,
- incurvée à concavité tournée vers l'axe de pivotement de la roue codeuse.

5. Dispositif selon la revendication 4, dans lequel le premier chemin de came (7) comprend un deuxième tronçon (7.2) s'étendant radialement depuis un voisinage du pourtour de la roue codeuse (2) jusqu'au premier tronçon (7.1).

6. Dispositif selon la revendication 1, dans lequel le doigt (3) coulisse selon une direction radiale de la roue codeuse (2).

7. Dispositif selon la revendication 1, dans lequel le doigt (3) coulisse selon une direction formant un angle avec une direction radiale de la roue codeuse (2).

8. Dispositif selon la revendication 1, dans lequel la manette principale (4) comprend deux flasques entre lesquels sont montées la manette secondaire (5) et la bielle (6).

## Patentansprüche

1. Vorrichtung zum Steuern eines Motors eines Luftfahrzeugs, umfassend ein Gestell (1), an dem eine Kodierscheibe (2) sowie ein Haupthebel (4) und ein Sekundärhebel (5) zum Drehantrieb der Kodierscheibe schwenkbar gelagert sind, wobei die Hebel jeweils zwischen einer Ruhestellung und einer maximalen Betätigungsstellung beweglich sind, wobei der Sekundärhebel schwenkbar an dem Haupthebel gelagert ist, **dadurch gekennzeichnet, dass** eine erste Kurvenbahn (7) an einem fest mit der Kodierscheibe verbundenen Teil ausgebildet ist und eine zweite Kurvenbahn (9) an einem fest mit dem Gestell verbundenen Teil ausgebildet ist, wobei die beiden Kurvenbahnen einen gegenüberliegenden Abschnitt haben, in dem ein Zapfen (3) aufgenommen ist, der am Haupthebel gelagert ist, um parallel zur Kodierscheibe zu gleiten, und den eine Stange (6) dauerhaft mit dem Sekundärhebel verbindet, und dass die Kurvenbahnen derart ausgebildet sind, dass der Haupthebel die Kodierscheibe antreiben kann, wenn der Haupthebel von der Ruhestellung des Sekundärhebels ab betätigt wird, und der Sekundärhebel die Kodierscheibe antreiben kann, wenn der Sekundärhebel von der Ruhestellung des Haupthebels ab betätigt wird, während eine Bewegung eines Hebels gesperrt ist, wenn der andere außerhalb seiner Ruhestellung ist.

2. Vorrichtung nach Anspruch 1, wobei der Haupthebel (4) koaxial zur Kodierscheibe (2) ist und die zweite Kurvenbahn (9) einen ersten Abschnitt (9.1) umfasst, der kreisbogenförmig koaxial zur Kodierscheibe ist, mit einem vorgegebenen Radius, um das Verschwenken des Haupthebels zu gestatten, während der Sekundärhebel (5) in Ruhestellung gehalten wird, sowie einen geradlinigen zweiten Abschnitt (9.2), der sich in einer Richtung erstreckt, die so angepasst ist, dass sie die Verschiebung des Sekundärhebels (5) gestattet, während der Haupthebel (4) in Ruhestellung gehalten wird.

3. Vorrichtung nach Anspruch 2, wobei die zweite Kurvenbahn (9.2) zwischen dem ersten Abschnitt und dem zweiten Abschnitt eine Rampe (9.3) umfasst, die eine Übergangszone nahe der Ruhestellung definiert, indem sie auf den Zapfen (3) derart einwirkt, dass, wenn sich einer der Hebel (4, 5) in der Übergangszone befindet, eine Verschiebung des anderen der Hebel in seine maximale Betätigungsstellung die Rückkehr des ersten Hebels in dessen Ruhestellung bewirkt.

4. Vorrichtung nach Anspruch 2, wobei die erste Kurvenbahn (7) einen ersten Abschnitt (7.1) umfasst, der so ausgebildet ist, dass er ein Verschwenken der Kodierscheibe (2) bewirkt, wenn der Zapfen (3) von dem zwischen seinen beiden Stellungen verschobenen Sekundärhebel (5) angetrieben wird, wobei der erste Abschnitt eine der Formen der folgenden Gruppe hat:
- geradlinig und einen Winkel mit einer radialen Richtung der Kodierscheibe bildend,
- gebogen mit einer Konkavität, die zur Schwenkachse der Kodierscheibe gerichtet ist.

5. Vorrichtung nach Anspruch 4, wobei die erste Kurvenbahn (7) einen zweiten Abschnitt (7.2) umfasst, der sich radial von nahe dem Umfang der Kodierscheibe (2) bis zum ersten Abschnitt (7.1) erstreckt.

6. Vorrichtung nach Anspruch 1, wobei der Zapfen (3) in einer radialen Richtung der Kodierscheibe (2) gleitet.

7. Vorrichtung nach Anspruch 1, wobei der Zapfen (3) in einer Richtung gleitet, die einen Winkel mit einer radialen Richtung der Kodierscheibe (2) bildet.

8. Vorrichtung nach Anspruch 1, wobei der Haupthebel (4) zwei Flansche umfasst, zwischen denen der Sekundärhebel (5) und die Stange (6) montiert sind.

## Claims

1. An aeroengine control device comprising a mount (1), having pivotally mounted thereon a code wheel (2) together with a main lever (4) and a secondary lever (5), both for turning the code wheel, each lever being movable between a rest position and a maximum actuation position, the secondary lever being mounted to pivot on the main lever, the device being **characterized in that** a first cam path (7) is formed on a part secured to the code wheel and a second cam path (9) is formed on a part secured to the mount, the two cam paths having respective facing portions in which there is received a finger (3) that is mounted on the main lever to slide parallel to the code wheel, with a connecting rod (6) permanently connecting the finger (3) to the secondary lever, and **in that** the cam paths are arranged in such a manner that the main lever can move the code wheel when the main lever is moved while the secondary lever is in its rest position, and the secondary lever can move the code wheel when the secondary lever is moved while the main lever is in its rest position, with movement of either lever being prevented when the other lever is away from its rest position.

2. A device according to claim 1, wherein the main lever (4) pivots about the axis of the code wheel (2) and the second cam path (9) includes a first segment (9.1) that is circularly arcuate about the axis of the code wheel, being of a radius that is determined to allow the main lever to pivot while keeping the secondary lever (5) in the rest position, and a rectilinear second segment (9.2) extending in a direction that is adapted to allow the secondary lever (5) to move while keeping the main lever (4) in the rest position.

3. A device according to claim 2, wherein the second cam path (9.2) includes a ramp (9.3) between the first segment and the second segment, which ramp defines a transition zone in the vicinity of the rest position by acting on the finger (3) in such a manner that when a first one of the levers (4, 5) is in the transition zone, moving the other lever towards its maximum actuation position causes the first lever to return to its rest position.

4. A device according to claim 2, wherein the first cam path (7) has a first segment (7.1) arranged to cause the code wheel (2) to pivot when the finger (3) is driven by the secondary lever (5) being moved between its two positions, the first segment having a shape selected from the following group:
• rectilinear, forming an angle relative to a radial direction of the code wheel; and
• curved, with its concave side facing towards the pivot axis of the code wheel.

5. A device according to claim 4, wherein the first cam path (7) has a second segment (7.2) extending radially from a vicinity of the periphery of the code wheel (2) to the first segment (7.1).

6. A device according to claim 1, wherein the finger (3) slides in a radial direction of the code wheel (2).

7. A device according to claim 1, wherein the finger (3) slides in a direction forming an angle relative to the radial direction of the code wheel (2).

8. A device according to claim 1, wherein the main lever (5) has two side plates between which the secondary lever (4) and the connecting rod (6) are mounted.
